# EUROPEAN PATENT APPLICATION

(11) **EP 3 051 080 A1**
(43) Date of publication of application: **03.08.2016**
(21) Application number: 15153501.0
(22) Date of filing: 02.02.2015
(51) Int. Cl.: F01L 1/14, F01L 1/18, F01L 13/08, F01L 13/06

(54) **Variable valve timing systems for internal combustion engines**

(71) Applicant: Caterpillar Energy Solutions GmbH, 68167 Mannheim (DE)
(72) Inventor: Guisasola, Íñigo, 76829 Landau (DE)
(74) Representative: Kramer Barske Schmidtchen Patentanwälte PartG mbB

(57) **Abstract**

A valve actuation assembly (40) for operating a valve of an engine (10) with adjustable closing times is disclosed. The valve actuation assembly (40) comprises a camshaft system comprising a camshaft (56) with a cam lobe (58), and a push rod (48) interacting with the cam lobe (58) to be displaced, during a rotation of the camshaft (56), in accordance with an actuation movement including a lifting movement (L) and a return movement (R). A rocker arm (46) is rotatably mounted to a rocker shaft (50) to perform a pivot movement and comprises a push rod section (46B) for interacting with the push rod (48), which provides a lifting force (Fl) onto the rocker arm (46) during the lifting movement (L), and a valve actuation section (46A) for operating an engine valve (30). A biasing force providing unit (52) provides a biasing force (Fb) counteracting the lifting force (Fl) and enforcing the return movement (R). A valve timing adjustment system (60) is configured to, in a blocking state (B), provide a delay force (Fd) acting against the biasing force (Fb) to block the rocker arm (46), thereby temporarily disengaging the rocker arm (46) from the push rod (48). Respective adaptation of valve closing times allows providing, for example, a filling optimized part load operation, while having a Miller operation at full load.

## Description

### Technical Field

The present disclosure generally relates to valve operation systems for an internal combustion engine and, more particularly, to adapting valve timings.

### Background

In internal combustion engines, rocker arm configurations are used to operate intake and exhaust valves. In particular several valves are provided, for example, within a cylinder head, each being operated by a respective rocker arm configuration. For example, an intake and an exhaust rocker arm configuration may control the opening and closing of two intake valves and two exhaust valves, respectively.

A common camshaft driving the rocker arm configurations may, for example, ensure respective timings. In some embodiments, intake and exhaust valves are driven by specifically shaped cams, thereby enforcing a specific valve timing that provides, for example, a Miller timing with a respective valve overlap.

There is a variety of valve timing adjustment mechanism known that allow, for example, an operation mode specific adjustment of valve timings.

The present disclosure is directed, at least in part, to improving or overcoming one or more aspects of prior systems.

### Summary of the Disclosure

In an aspect, a valve actuation assembly for operating a valve of an engine with adjustable closing times, thus adjustable opening durations, is disclosed. The valve actuation assembly comprises a camshaft system comprising a camshaft with a cam lobe, and a push rod interacting with the cam lobe to be displaced, during a rotation of the camshaft, in accordance with an actuation movement including a lifting movement and a return movement. A rocker arm is rotatably mounted to a rocker shaft to perform a pivot movement and comprises a push rod section for interacting with the push rod, which provides a lifting force onto the rocker arm during the lifting movement, and a valve actuation section for operating an engine valve. A biasing force providing unit provides a biasing force counteracting the lifting force and enforcing the return movement. A valve timing adjustment system is configured to, in a blocking state, provide a delay force acting against the biasing force to block the rocker arm, thereby temporarily disengaging the rocker arm from the push rod.

In another aspect, a method for operating a valve of an engine with adjustable closing times is disclosed, wherein the engine comprises a rocker arm/push rod based valve actuation system such as a valve actuation assembly described above. The method comprises selectively providing a delay force configured to counteract a biasing force to block a rocker arm during the return movement of the push rod, thereby temporarily disengaging the rocker arm from the push rod.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic cross-sectional view of an internal combustion engine with a camshaft driven rocker arm based valve drive;
Fig. 2 shows a schematic illustration of exemplary valve lift curves;
Fig. 3 shows a schematic illustration of a first embodiment of an exemplary valve timing adjustment system;
Fig. 4 shows a schematic illustration of a second embodiment of an exemplary valve timing adjustment system; and
Fig. 5 shows a schematic illustration of a modification of the first embodiment of an exemplary valve timing adjustment system; and
Fig. 6 and Fig. 7 show schematic illustrations of exemplary modifications of push rod/rocker arm connections.

### Detailed Description

The following is a detailed description of exemplary embodiments of the present disclosure. The exemplary embodiment described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that selectively blocking the rocker arm may allow influencing the valve closing time. It was further realized that this may be advantageously used at the start of the engine and/or at part load operation. For example, by prolonging the valve closing time of the intake valve, a desired load acceleration may be achieved.

It was further realized that the rocker arm may be blocked, for example, on one side of the rocker arm shaft by a hydraulic cylinder. Supplying the hydraulic cylinder by engine oil may result in a blocking position of a piston, not allowing the rocker arm to follow the push rod. To later-on achieve a closing of the valve, one may, for example, have oil flowing out through a bearing clearance of the piston and/or through a controllable release valve.

Moreover, it was realized that - for example when the oil pressure is not (yet) sufficient to move the hydraulic piston fast enough into the blocking position - the piston may be also be moved by the rocker arm, e.g. by a direct mechanical connection or by a hydraulic positioning cylinder.

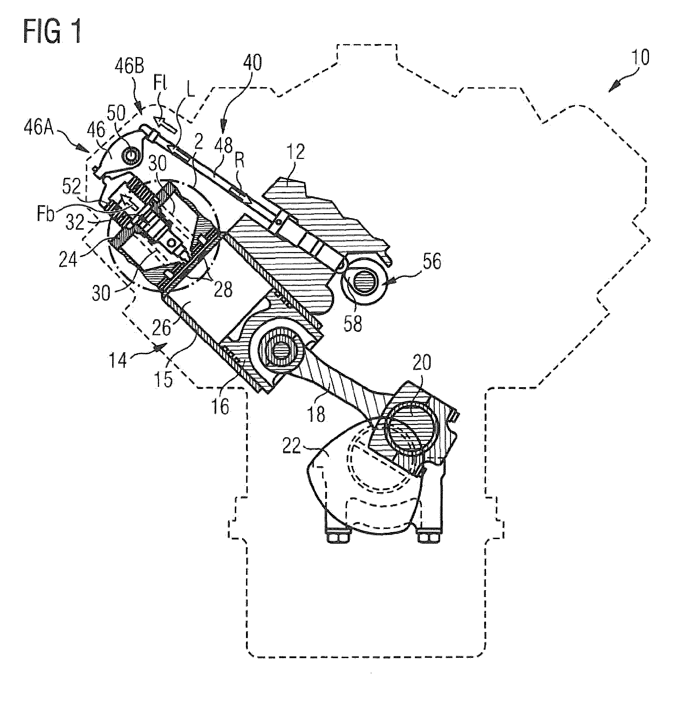

Referring to the drawings, exemplary embodiments are disclosed that illustrate the herein disclosed adjustable valve timing concepts that can be employed, for example, in the internal combustion engine of Fig. 1.

Specifically, in Fig. 1 an exemplary embodiment of an internal combustion engine 10 is illustrated that uses a camshaft driven rocker arm system for valve actuation exemplarily for a pre-combustion chamber ignitied gaseous fuel operation. Engine 10 may include features not shown, such as a fuel system, an air system, a cooling system, drivetrain components, etc. For the purpose of the present disclosure, engine 10 is exemplarily considered a four-stroke gaseous fuel internal combustion engine. One skilled in the art will recognize, however, that engine 10 may be any type of engine (two-stroke, turbine, gas, diesel, natural gas, propane, etc.). Furthermore, engine 10 may be of any size, with any number of cylinders, and in any configuration ("V", in-line, radial, etc.). Engine 10 may be used to power any machine or other device, including locomotive applications, on-highway trucks or vehicles, off-highway trucks or machines, earth moving equipment, generators, aerospace applications, marine applications, pumps, stationary equipment, or other engine powered applications.

Engine 10 includes an engine block 12 having a plurality of cylinder units 14 (one of which is illustrated in Fig. 1). A piston 16 is slidably disposed within cylinder unit 14 (e.g. within a cylinder liner 15) to reciprocate between a top-dead-center position (TDC) and a bottom-dead-center position (BDC). A connecting rod 18 connects piston 16 to an eccentric crankpin 20 of a crankshaft 22 such that reciprocating motion of piston 16 results in rotation of crankshaft 22.

Engine 10 includes further a cylinder head 24 (enlarged in Fig. 1) that is mounted to engine block 12 and covers cylinder unit 14, thereby delimiting a main combustion chamber 26. Cylinder head 24 provides intake and exhaust openings 28 to charge main combustion chamber 26, for example, with a charge air-gaseous fuel mixture and to release exhaust gases out of main combustion chamber 26 into an exhaust gas system (not shown). Engine valves 30 are configured to selectively open and close respective openings 28, e.g. by a valve stem with a valve head (not shown in Fig. 1). Each cylinder unit 14 may include multiple intake and exhaust openings 28 and respectively multiple intake and exhaust valves 30.

Engine 10 further may include an assembly configured to initiate a combustion event. As exemplarily shown in Fig. 1, engine 10 may include a pre-combustion chamber assembly 32 (also referred to as pre-combustion chamber ignition device), which is positioned within cylinder head 24, for example between valves 30. Pre-combustion chamber assembly 32 may be configured in a variety of ways. In general, it is an assembly configured to initiate a combustion event within a pre-combustion chamber, and to direct the combustion into main combustion chamber 26.

The internal combustion engine 10 may include a series of valve actuation assemblies 40 (one of which is exemplarily illustrated in Fig. 1). Multiple valve actuation assemblies 40 may be provided per cylinder unit 14, e.g. for different valve types (e.g. intake or exhaust valve). For example, valve actuation assembly 40 is used to open and close the intake valve(s) and another, for example similar, valve actuation assembly 40 may be provided to open and close the exhaust valve(s).

Valve actuation assembly 40 includes a rocker arm 46. Rocker arm 46 is pivotally mounted on cylinder head 24 by a rocker shaft 50 and interacts with engine valves 30 at a valve actuation section 46A and with a push rod 48 at a push rod section 46B.

Push rod section 46B engages with one end of push rod 48, the other end engages (as exemplarily shown in Fig. 1) with a cam lobe 58 disposed on camshaft 56 to drive (lift) push rod 48 when camshaft 56 is rotated. Camshaft 56 may be driven by crankshaft 22. Camshaft 56 may be connected with crankshaft 22 in any manner readily apparent to one skilled in the art where rotation of crankshaft 22 may result in a rotation of camshaft 56. For example, camshaft 56 may be connected to crankshaft 22 through a gear train (not shown).

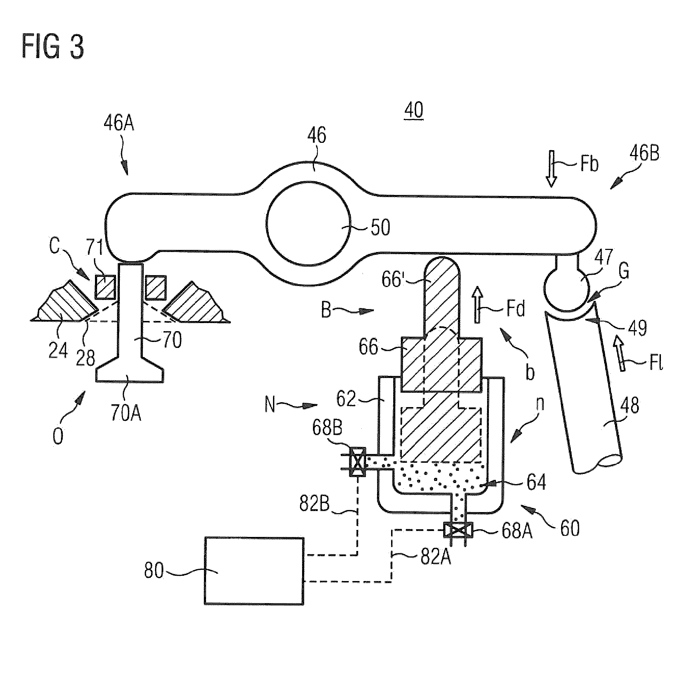

The displacement of push rod 48 corresponds to an actuation movement of push rod 48 in consequence resulting in a conventional activation of valve 30, which is herein referred to as an non-blocking operation mode (e.g. a conventional valve operation via push rod/camshaft configurations). Specifically, the actuation movement includes a lifting movement L and a return movement R. Lifting movement L is caused by the shape of cam lobe 58 and results in a lifting force Fl onto rocker arm 46 redirected via the pivot mounting onto the valve stem. Thus, due to engagement with valve actuation section 46A, the valve stem of valve 30 moves from a closed position C to an open position O during lifting movement L (see also Fig. 3).

Assuming non-fixed connections between rocker arm 46 and push rod 48 as well as rocker arm 46 and the valve stem, return movement R will not automatically result in a closing of the valve (e.g. return of the valve stem into closed position C of valve 30). Therefore, valve actuation assembly 40 may include - as a biasing force providing unit - for example, a valve spring 52 that provides a biasing force Fb onto the valve stem of valve 30 towards the closed position and, thus, generally counteracts against lifting force Fl. Once the maximum extension of cam lobe 58 is reached, biasing force Fb enforces return movement R, thereby giving free a respective movement of rocker arm 46 and the valve stem. In consequence, opening 28 is closed via respective valves head.

Thus, the non-blocking operation results in an oscillation of rocker arm 46 about its pivot point in dependence of the shape of cam lobe 58 and in respective opening duration of valve(s) 30.

One skilled in the art may recognize that camshaft 56 may include additional cam lobes to engage with additional push rods in order to actuate additional engine valves.

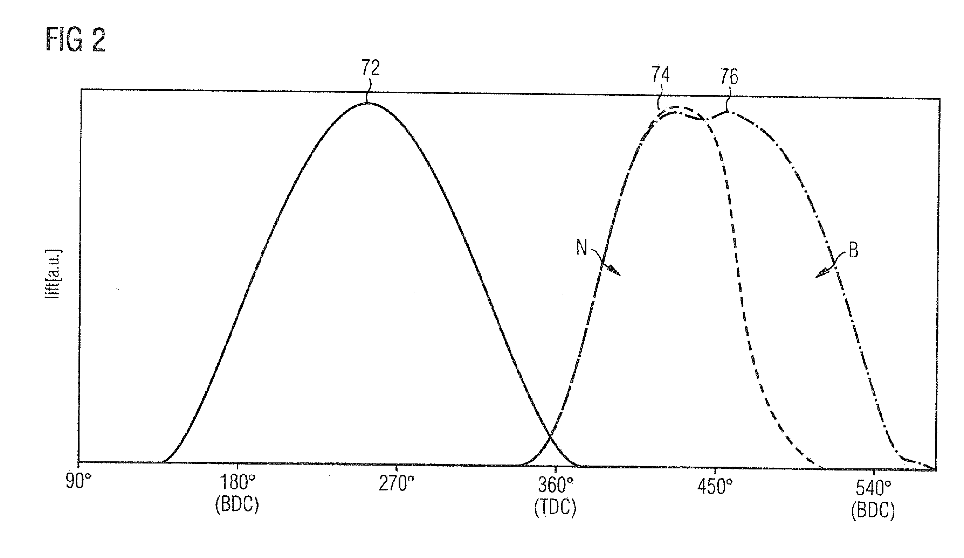

Fig. 2 shows a plot of exemplary valve lift curves. In particular, Fig. 2 shows an exhaust valve curve 72 extending from about 140° to 370° crankshaft angle during an exhaust stroke, and an intake valve curve 74 extending from about 350° to 490° crankshaft angle during an intake stroke. The schematically indicated curves 72 and 74 illustrate as an example an extreme Miller valve timing that reaches a high efficiency and may be applied, for example, at full load. However, those valve lift curves 72 and 74 may not be optimal to start engine 10 or to operate the same at part load as then a relative small load acceleration may be present.

The configurations explained in the following may allow adaptation of valve timings, for example, for the starting phase or part load operation of engine 10. As an example, a filling optimized lift curve 76 for an intake valve is schematically included in Fig. 2. Filling optimized lift curve 76 extends, for example, from 350° to 570° crankshaft angle and allows to increase the filling of main combustion chamber with charge air, thereby, for example, reducing the risk of knocking at part load such that a larger power output and improved load acceleration may be achieved. In particular when operated as a separate power supply, this aspect may affect the combustion tuning.

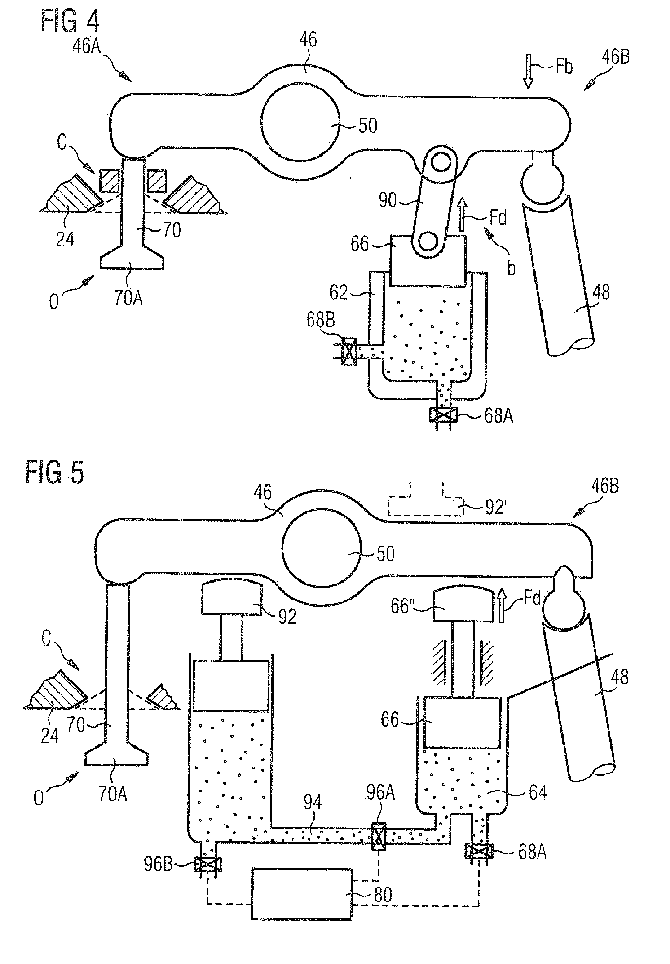

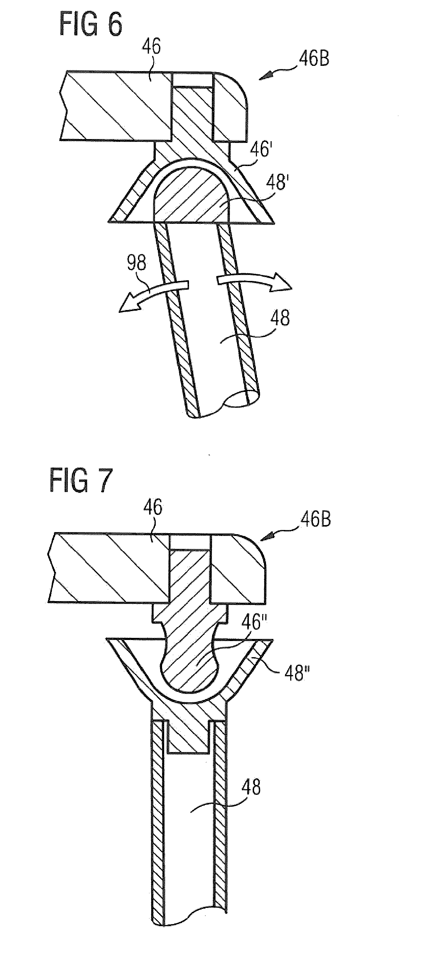

In connection with the Fig. 3 to Fig. 7, exemplary embodiments of systems to modify the valve closing times - usually enforced by the cam lobe shape and the valve spring - are described. Those exemplary embodiments may, for example, be used in engine 10 of Fig. 1. Specifically, Fig. 3 illustrates a hydraulic delay unit acting onto a rocker arm. Fig. 4 shows a modified hydraulic delay unit including a mechanical reset system. Fig. 5 shows a modified hydraulic delay unit including a hydraulic reset system. Figs. 6 and 7 illustrate exemplary embodiments of a rocker arm/push rod system for ensuring proper operation also for an adapted valve closing time.

With reference to Fig. 3, a schematical illustration of a valve actuation assembly 40 is exemplarily illustrated. Valve actuation assembly 40 includes inter alia components such as camshaft 56, cam lobe 58, and push rod 48 (camshaft system exemplarily shown in Fig. 1). Moreover, valve actuation assembly 40 includes rocker arm 46 mounted to rocker shaft 50, and a biasing force providing unit, which is configured to provide a biasing force Fb counteracting lifting force Fl, in particular for enforcing return movement R.

In addition, valve actuation assembly 40 comprises a valve timing adjustment system 60. Valve timing adjustment system 60 of Fig. 3 is based on a hydraulic system that is configured, for example, to be fluidly connected to an engine oil system (not shown) and/or to be part of a separate hydraulic system.

Specifically, the hydraulic system comprises a (for example hollow-cylinder) unit 62 forming a hydraulic chamber 64 therein. As shown in Fig. 3, a delay piston 66 is movable within hydraulic chamber 64 such that the hydraulic system - or generally any systems to modify the valve closing times - can be in a blocking state B or in a non-blocking state N as temporally also indicated in Fig. 2. Blocking state B corresponds to a blocking position b of delay piston 66 and non-blocking state N corresponds to a non-blocking position n of delay piston 66.

Although Fig. 3 indicates a maximal open position for blocking position b of the piston, in some embodiments, delay piston 66 may be blocked at some preset opening state, e.g. at half way between maximum open position and closed position, thereby providing a larger space between a valve head 70A and piston 16.

The hydraulic system further comprises a supply valve 68A for fluidly connecting hydraulic chamber 64 with a hydraulic fluid source (not shown, e.g. engine oil system). Having pressurized hydraulic fluid enter hydraulic chamber 64, delay piston 66 will be pushed outwards of hydraulic chamber 64 until itself or some extension 66' attached to it is in contact with push rod section 46B (i.e. is in blocking position b). Thereby, a delay force Fd onto rocker arm 46 is created via the pressurized hydraulic fluid. As a result, push rod 48 may move, for example by gravity, along the decreasing slope of cam lobe 58, thereby at least partially completing the return movement R. However, push rod section 46B maintains (essentially) its position such that, for example, a joint part of rocker arm 46 and a joint part of push rod 48 will separate, creating a gap G there-between.

In general, valve actuation assembly 40 is configured to, in blocking state B, provide a delay force Fd acting against biasing force Fb. Delay force Fd blocks rocker arm 46 during a preset time and temporarily disengages rocker arm 46 from push rod 48. Accordingly, rocker arm 46 may no longer follow return movement R of push rod 48 as shown in Fig. 3 right side.

In consequence, as shown in Fig. 3 left side, a valve 30 will maintain open for a longer time. Specifically, a valve stem 70 including valve head 70A will remain in an open position O, thereby allowing additional charge air to enter main combustion chamber 26 (shown in Fig. 1). For completeness, a valve stem guidance 71 is schematically illustrated in Fig. 3.

Only when valve timing adjustment system 60 has returned into non-blocking state N (corresponding to the dashed line illustration of delay piston 66), valve head 70A will close and seal opening 28 again. Thus, bringing valve 30 into its closed state C is delayed.

In some embodiments, (hollow-cylinder) unit 62 and delay piston 66 may be configured such that a leakage out of hydraulic chamber 64 takes place at a rate such that delay force Fd decreases overtime, for example at a preset rate. Accordingly, as soon as biasing force Fb can overcome delay force Fd, push rod section 46B will (although in some embodiments slowly) follow return movement R of push rod 48, thereby closing gap G and moving valve stem 70 into closed position C.

In addition or alternatively, a release valve 68B may be provided to be able to release hydraulic fluid from hydraulic chamber 64 in a controlled manner. This may allow, in particular, adjusting the dynamics of the closing of valve 30.

As further shown in Fig. 3 supply valve 68A and release valve 68B may be connected to a control unit 80 via control lines 82A, 82B. Control unit 80 is configured to activate valve timing adjustment system 60 to move into blocking state B or to return to non-blocking state N.

Depending on the pressure of the pressurized fluid provided to hydraulic chamber 64, the movement and reaction of delay piston 66 itself may vary. To ensure proper positioning of delay piston 66, a mechanical or hydraulic piston positioning system may be provided.

For completeness, the crankshaft angle associated with Figs. 3 (as well as Fig. 4) is, for example, about 470°.

An example of a mechanical piston positioning system is shown in Fig. 4. Specifically, a mechanical connection 90 may be provided between, for example, push rod section 46B of rocker arm 46 and delay piston 66. Due to the mechanical connection 90 and assuming an opened hydraulic system, delay piston 66 will follow the movement of rocker arm continuously. Closing the hydraulic system (e.g. closing valves 68A and 68B) around the angular positions of maximum opening of valve 30, maintains valve timing adjustment system 60 automatically in blocking state B.

In other words, delay piston 66 will be automatically moved during each combustion cycle into blocking position b that in principal would allow activating blocking state B. If at the respective timing, supply valve 68A (and if provided release valve 68B) are closed, delay piston 66 will remain in blocking position b and thereby block any further movement of rocker arm 46.

As a result, delay piston 66 enforces an extension of the valve opening duration (e.g. by delay of the closing time) of, for example, an intake valve, as schematically indicated in Fig. 2 by curve 76. Depending on the provided decrease of pressure within hydraulic chamber 64, the closing of the respective valve will be affected.

An example of a hydraulic piston positioning system is shown in Fig. 5. In contrast to the mechanical piston position system of Fig. 4, the hydraulic piston positioning system is configured to bring delay piston 66 in its blocking position by interaction with rocker arm 46 in a selective manner. The crankshaft angle associated with Fig. 5 is, for example, 430°.

Referring to Fig. 5, the piston positioning system comprises a positioning piston 92 hydraulically connectable to hydraulic chamber 64, for example, via a (hydraulic) pipe system 94.

Positioning piston 92 and pipe system 94 are configured to provide an interaction of positioning piston 92 with, for example, valve actuation section 46A of rocker arm 46 (as shown in Fig. 5 left side). In some embodiments, an interaction may take place at push rod section 46B with a side of rocker arm that is opposite to the interaction side with push rod 48 (as schematically indicated by positioning piston 92' in Fig. 5 right side).

As further shown in Fig. 5, pipe system 94 may comprise a valve 96A for hydraulically disconnecting hydraulic chamber 64 from positioning piston 92. In addition, pipe system 94 may be supplied separately with hydraulic fluid via a valve 96B. Valves 96A and 96B may be connected to control unit 80 via control lines.

During operation of the engine, delay piston 66 may be positioned in a non-blocking position. Valve 96A may be closed and 96B may be opened to push positioning piston 92 towards rocker arm 46 until the same is in contact at a closing state of valve 30. At that moment, valve 96B is closed and valve 96A is opened while supply valve 68A is closed as well. Thereby, a hydraulic connection between positioning piston 92 and delay piston 66 is formed.

During the valve opening movement, positioning piston 92-being in contact with rocker arm 46 - will be moved, thereby pushing hydraulic fluid into pipe system 94 such that delay piston 66 is moved towards rocker arm 46 until it reaches the position corresponding to maximum valve openen.

For example, the configuration of pipe system 94, the provided hydraulic fluid volume, and the positions of the pistons 92, 66 with respect to rocker shaft 50 may be selected such that, at the moment of maximum valve opening, delay piston 66 is in its desired blocking position. Then, valve 96A is closed. Accordingly, delay piston 66 will remain in its blocking position until, for example, the pressure within hydraulic chamber 64 is reduced in a controlled manner via supply valve 68A or by leakage. In addition or alternatively, valve 96A may be opened at least partly to allow positioning piston 92 to follow the upward movement of valve actuation section 46A to some extent and/or it may follow a downward (closing movement) for same extent until an intermediary opening of valve 30 is reached when valves 96A und 68A are closed to maintain that specifically selected closing position of delay piston 66.

Alternative activation cycles of the various valves and/or positioning of valves will be apparent to the skilled person to allow for flexible positioning of delay piston 66 in blocking position.

Referring to gap G in Fig. 3, Fig. 6 and Fig. 7 propose potential joint configurations between push rod section 46B of rocker arm 46 and push rod 48. Specifically, the joint is configured to tolerate a gap G that is created when rocker arm 46 is blocked and push rod 48 follows cam lobe 58. For example, in Fig. 6 and Fig. 7, a joint part 46'/46" is provided at rocker arm 46, and a joint part 48'/48" is provided at push rod 48.

The geometries of the joint parts are configured such that, during the respective mechanical movements of rocker arm 46 and push rod 48, the respective joint parts will be brought into proper position with respect to each other to again interact as a joint.

In general, any tilt (exemplarily indicated by arrows 98 in Fig. 6) of push rod 48 varies in dependence of the valve lift. To ensure that push rod 48 and rocker arm 46 will be properly positioned once the gap G is reduced again, one of the joint parts, for example joint part 46' at rocker arm 46 (as shown in Fig. 6) or joint part 48" at push rod 48 (as shown in Fig. 7) comprises a cone-like shape.

In some embodiments, the cone-like shape is provided at least in one dimension such as in Fig. 6 and Fig. 7 in the plane of drawing. Thereby, any tilting of push rod 48 in the plane of the drawing is limited by the joint part's cup shape. Thus, despite the temporarily introduced gap G, proper alignment of the joint parts is given.

As an exemplary embodiment, a cup-like shaped extension is illustrated in Figs. 6 and 7. The other joint part may be, for example, a ball joint part or a cylinder joint part.

Alternative configurations may be apparent to the skilled person to maintain proper joint alignment despite temporal introduction of a gap G between the joint parts.

### Industrial Applicability

As illustrated above, a valve timing adjustment system 60 can be used to interact with rocker arm 46 and to provide a delay force Fd acting against biasing force Fb. In particular, the valve closing of an engine valve can be delayed but in similar configurations also the opening of an engine valve may be adapted. In general, providing respective mechanical/hydraulic systems and/or controllable valves (as described above) may allow selectively activate and controllably adjust the specific opening and closing times of the respective engine valve.

In some embodiments, one or more cylinder units 14 of engine 10 may be provided with respective valve timing adjustment systems, thereby improving, for example, the starting behavior of engine 10.

The herein disclosed concepts may be used, for example, in gas engines manufactured by Caterpillar Energy Solutions GmbH.

Although the preferred embodiments of this invention have been described herein, improvements and modifications may be incorporated without departing from the scope of the following claims.

## Claims

1. A valve actuation assembly (40) for operating a valve (30) of an engine (10) with adjustable closing times, the valve actuation assembly (40) comprising:
a camshaft system comprising a camshaft (56) with a cam lobe (58), and a push rod (48) interacting with the cam lobe (58) to be displaced, during a rotation of the camshaft (56), in accordance with an actuation movement including a lifting movement (L) and a return movement (R);
a rocker arm (46) rotatably mounted to a rocker shaft (50) to perform a pivot movement and comprising a push rod section (46B) for interacting with the push rod (48), which provides a lifting force (Fl) onto the rocker arm (46) during the lifting movement (L), and a valve actuation section (46A) for operating an engine valve (30);
a biasing force providing unit (52) providing a biasing force (Fb) counteracting the lifting force (Fl) and enforcing the return movement (R); and
a valve timing adjustment system (60) configured to, in a blocking state (B), provide a delay force (Fd) acting against the biasing force (Fb) to block the rocker arm (46), thereby temporarily disengaging the rocker arm (46) from the push rod (48).

2. The valve actuation assembly (40) of claim 1, wherein the valve timing adjustment system (60) comprises a hydraulic system comprising a hydraulic chamber (64) and a delay piston (66) movable within the hydraulic chamber (64), wherein the hydraulic system is configured such that, in the blocking state (B), the delay piston (66) provides the delay force (Fd) onto the rocker arm (46).

3. The valve actuation assembly (40) of claim 2, wherein the hydraulic system comprises a supply valve (68A) for providing a hydraulic fluid to the hydraulic chamber (64), wherein the supply valve (68A) is in particular fluidly connected to a hydraulic fluid source such as an engine oil system providing pressurized engine oil.

4. The valve actuation assembly (40) of claim 2 or claim 3, wherein the hydraulic system is configured such that, in the blocking state (B), the delay piston (84) or a piston extension (66', 66") contacts the rocker arm (46).

5. The valve actuation assembly (40) of any of claim 2 to claim 4, wherein the hydraulic chamber (64) and the delay piston (66) are configured such that a leakage out of the hydraulic chamber (64) is provided at a preset rate for reducing the delay force (Fd) within a preset time period.

6. The valve actuation assembly (40) of any of claim 2 to claim 4, wherein the hydraulic system further comprises a release valve (68B) for releasing hydraulic fluid from the hydraulic chamber (64) to reduce the delay force (Fd) in a controlled manner

7. The valve actuation assembly (40) of any of claim 2 to claim 6, wherein the dela piston (66) acts onto the push rod section of the rocker arm (46), in particular from the same side as the push rod (48) or onto the valve actuation section (46A) of the rocker arm from the side opposing the interaction with the valve (30).

8. The valve actuation assembly (40) of any of claim 2 to claim 7, wherein the hydraulic system further comprises a piston positioning system for positioning the delay piston (66) in a blocking position (b).

9. The valve actuation assembly (40) of claim 8, wherein the piston positioning system comprises a mechanical connection (90) between the rocker arm (46) and the delay piston (66) or a piston extension.

10. The valve actuation assembly (40) of claim 8 or claim 9, wherein the piston positioning system comprises a positioning piston (92, 92') hydraulically connected to the hydraulic chamber (64) and interacting with the rocker arm (46) to push the delay piston (66) or a piston extension (66', 66") against the rocker arm (46).

11. The valve actuation assembly (40) of any of claim 2 to claim 10, further comprising a control unit (80) configured to control valves of the hydraulic system such as to pressurize the hydraulic chamber (64), depressurize the hydraulic chamber (64), hydraulically connecting the piston positioning system with the hydraulic chamber (64), and pressurizing a hydraulical piston position system.

12. The valve actuation assembly (40) of any one of the preceding claims, wherein the valve timing adjustment system (60) is further configured to, in a non-blocking state (N), disengage from the rocker arm (46), thereby allowing the rocker arm (46) and the push rod (48) to follow the cam lobe (58) during the return movement (R).

13. An internal combustion engine (10) comprising:
the valve actuation assembly (40) of any one of the preceding claims;
a cylinder head (24) with a valve opening (28) fluidly connecting a combustion chamber (26) with a charge air system; and
a valve (30),
wherein the valve (30) comprises a valve stem (70) with a valve head (70A) for closing the valve opening (28), a valve stem guidance for guiding a movement of the valve stem (70), and a valve spring (52) configured such that its spring force acts as the biasing force (Fb), inparticular by acting via the valve stem (70) onto the rocker arm (46), thereby ensuring that the rocker arm (46) follows the return movement (R) of the push rod (48) unless the valve timing adjustment system (60) is in the blocking state (B).

14. A method for operating a valve (30) of an engine (10) with adjustable closing times, the engine (10) comprising a rocker arm/push rod based valve actuation system such as a valve actuation assembly (40) according to any one of claim 1 to claim 12, the method comprising:
selectively providing a delay force (Fd) configured to counteract a biasing force (Fb) to block a rocker arm (46) during the return movement (R) of the push rod (48), thereby temporarily disengaging the rocker arm (46) from the push rod (48).
